# EUROPEAN PATENT APPLICATION

(11) **EP 4 647 944 A1**
(43) Date of publication of application: **12.11.2025**
(21) Application number: 23923669.8
(22) Date of filing: 13.09.2023
(51) Int. Cl.: G06F 17/16

(54) **DATA PROCESSING METHOD AND SYSTEM, AND RELATED DEVICE**

(30) Priority: 20.02.2023 CN 202310183425
(71) Applicant: Huawei Technologies Co., Ltd., Shenzhen, Guangdong 518129 (CN)
(72) Inventor: WANG, Zhe, Shenzhen, Guangdong 518129 (CN); SONG, Changcheng, Shenzhen, Guangdong 518129 (CN); WANG, Long, Shenzhen, Guangdong 518129 (CN); MAO, Yuxin, Shenzhen, Guangdong 518129 (CN); MA, Penghao, Shenzhen, Guangdong 518129 (CN); BAI, Yida, Shenzhen, Guangdong 518129 (CN)
(74) Representative: Maiwald GmbH
(86) International application number: PCT/CN2023/118469
(87) International publication number: WO 2024/174503

(57) **Abstract**

A data processing method and apparatus, and a related device are provided. LU factorization calculation is performed on to-be-processed data of an application, that is, a dense matrix; for a to-be-factorized matrix that needs to be factorized in each iteration process, LU factorization is performed on R columns of submatrices; and matrix multiplication calculation at a dimension of a product of R and a submatrix dimension is performed. The dimension of matrix multiplication calculation is large, and efficient matrix multiplication calculation can be implemented. In this way, the dense matrix can be divided into submatrices at a small granularity, to ensure high matrix multiplication calculation efficiency while implementing balanced process load, so as to improve overall matrix factorization calculation efficiency.

## Description

This application claims priority to Chinese Patent Application No. 202310183425.X, filed with the China National Intellectual Property Administration on February 20, 2023 and entitled "DATA PROCESSING METHOD AND SYSTEM, AND RELATED DEVICE", which is incorporated herein by reference in its entirety.

### TECHNICAL FIELD

This application relates to the field of data processing technologies, and in particular, to a data processing method and system, and a related device.

### BACKGROUND

In calculation processes of numerous scientific and engineering fields, such as meteorology, electromagnetism, hydrodynamics, and celestial simulation, and a test process of computer computing performance, calculation of matrix solving is included. Matrices can include a dense matrix and a sparse matrix based on storage formats of the matrices. The dense matrix is a matrix in which all elements are stored in a logical two-dimensional direction. The sparse matrix is a matrix in which only non-zero elements in all elements are stored. The dense matrix can be solved through matrix factorization.

Currently, the dense matrix is divided into blocks, each block is allocated to each process, and matrix factorization calculation is performed in a unit of each block. In a process of matrix factorization calculation, a calculation amount of matrix multiplication is large. To improve calculation efficiency of matrix multiplication, a matrix is usually divided into blocks at a large granularity, to increase an amount of data that participates in matrix multiplication calculation. However, because quantities of blocks in matrix factorization calculation tasks for which processes are responsible are different, the blocks at a large granularity cause a problem of imbalanced process load. As a result, overall matrix factorization calculation efficiency is reduced.

### SUMMARY

This application provides a data processing method and system, and a related device, so that in a process of performing matrix factorization on to-be-processed data, that is, a dense matrix, combined LU factorization and a combined row switching operation can be performed, and matrix multiplication calculation at a dimension of a sum of R submatrix dimensions can be performed. The dimension of matrix multiplication calculation is large, and efficient matrix multiplication calculation can be implemented. In this way, the dense matrix can be divided into blocks at a small granularity, to ensure high matrix multiplication calculation efficiency while implementing balanced process load, so as to improve overall matrix factorization calculation efficiency.

According to a first aspect, this application provides a data processing method. The method is applied to a computing device or a computing cluster that runs a plurality of processes. The method includes: obtaining to-be-processed data of an application, where the to-be-processed data is a dense matrix including M*M submatrices; using the dense matrix as a to-be-factorized matrix; dividing the to-be-factorized matrix into a first matrix, a second matrix, a third matrix, and a fourth matrix, where the first matrix includes R*R submatrices that are located in an upper left corner of the to-be-factorized matrix, the second matrix includes R*(M-R) submatrices that are located right below the first matrix and adjacent to the first matrix, the third matrix includes (M-R)*R submatrices that are located on a right side of the first matrix and adjacent to the first matrix, and the fourth matrix includes remaining (M-R)*(M-R) submatrices of the to-be-factorized matrix; performing LU factorization on the first matrix and the second matrix to obtain an updated first matrix and an updated second matrix; then performing a row switching operation on the third matrix, and performing triangular solving by using the updated first matrix and a third matrix obtained through the row switching operation to obtain an updated third matrix; invoking a GEMM operator to calculate a difference between the fourth matrix and a product obtained by performing matrix multiplication on the updated second matrix and the updated third matrix to obtain an updated fourth matrix; and then using the updated fourth matrix as a to-be-factorized matrix, performing a same factorization operation, and performing an iteration until calculation of all the M*M submatrices is completed. A dimension of matrix multiplication calculation performed by using the GEMM operator is a product of R and a submatrix dimension, that is, a sum of dimensions of R submatrices. In comparison with a case in which a matrix multiplication dimension is a dimension of a single submatrix, in this case, the dimension of matrix multiplication calculation performed by using the data processing method in this application is large, so that a requirement for efficient matrix multiplication calculation can be met. While ensuring high efficiency of matrix multiplication, a dimension of the submatrices included in the dense matrix can be slightly small. In this way, load imbalance that occurs when calculation tasks of the submatrices are respectively processed by using a plurality of processes can be reduced, thereby improving overall dense matrix factorization calculation efficiency.

In some possible implementations, a value of R is determined based on a computing capability of a chip that performs matrix multiplication.

In some possible implementations, a to-be-factorized matrix to be factorized in a last iteration, that is, an updated fourth matrix generated in a previous iteration, includes N*N submatrices. When N is less than or equal to R, LU factorization is directly performed on the N*N submatrices in the last iteration, to complete factorization on the dense matrix, and obtain a factorization result.

In some possible implementations, row switching information is generated in a process of performing LU factorization on the first matrix and the second matrix. In an example, the row switching operation is performed on the third matrix, and specifically, the row switching operation can be performed on the third matrix row by row based on the row switching information. In another example, the row switching information can be preprocessed first to obtain processed row switching information, and then the row switching operation is performed on the third matrix based on the processed row switching information. The row switching information can be combined or filtered through preprocessing, steps of performing the row switching operation are reduced, and efficiency of performing the row switching operation on the third matrix is improved.

According to a second aspect, this application provides a data processing system. The system includes:
an obtaining module, configured to obtain to-be-processed data of an application, where the to-be-processed data is a dense matrix, and the dense matrix includes M*M submatrices;
a division module, configured to use the dense matrix as a to-be-factorized matrix, and divide the to-be-factorized matrix into a first matrix, a second matrix, a third matrix, and a fourth matrix, where the first matrix includes R*R submatrices that are located in an upper left corner of the to-be-factorized matrix, the second matrix includes R*(M-R) submatrices that are located right below the first matrix and adjacent to the first matrix, the third matrix includes (M-R)*R submatrices that are located on a right side of the first matrix and adjacent to the first matrix, and the fourth matrix includes remaining (M-R)*(M-R) submatrices; and
a calculation module, configured to perform LU factorization on the first matrix and the second matrix to obtain an updated first matrix and an updated second matrix, perform a row switching operation on the third matrix, perform triangular solving by using the updated first matrix and a third matrix obtained through the row switching operation to obtain an updated third matrix, invoke a GEMM operator to perform matrix multiplication calculation on the updated second matrix and the updated third matrix to obtain a product, and calculate a difference between the fourth matrix and the product to obtain an updated fourth matrix.

The calculation module is further configured to use the updated fourth matrix as a to-be-factorized matrix, perform a factorization operation the same as that performed on the dense matrix, and perform an iteration until calculation of all the M*M submatrices is completed.

In some possible implementations, a value of R is determined based on a computing capability of a chip that is in a computing device and that performs matrix multiplication, a scale of the dense matrix, and a scale of a computing device cluster to which the computing device belongs.

In some possible implementations, the calculation module is further configured to: when the updated fourth matrix includes N*N submatrices, and N is less than or equal to R, perform LU factorization on the N*N submatrices.

In some possible implementations, that the calculation module is configured to perform the row switching operation on the third matrix includes:

The calculation module is configured to perform the row switching operation on the third matrix row by row based on row switching information, where the row switching information is generated by performing LU factorization on the first matrix and the second matrix.

In some possible implementations, that the calculation module is configured to perform the row switching operation on the third matrix includes:

The calculation module is configured to preprocess row switching information to obtain processed row switching information, where the row switching information is generated by performing LU factorization on the first matrix and the second matrix; and perform the row switching operation on the third matrix based on the processed row switching information.

According to a third aspect, this application provides a computer code product including instructions. When the computer code product runs on a computing device, the computing device is enabled to perform the method according to any one of the first aspect or the implementations of the first aspect.

Based on the implementations provided in the foregoing aspects, the implementations in this application may be further combined to provide more implementations.

### BRIEF DESCRIPTION OF DRAWINGS

FIG. 1 is a diagram of allocating blocks, which are obtained by dividing a dense matrix, into processes;
FIG. 2 is a diagram of dense matrix factorization;
FIG. 3 is another diagram of dense matrix factorization;
FIG. 4 is a schematic flowchart of a data processing method according to an embodiment of this application;
FIG. 5 is a diagram of a first matrix, a second matrix, a third matrix, and a fourth matrix that are included in a to-be-factorized matrix according to an embodiment of this application;
FIG. 6 is a diagram of a structure of a data processing system according to an embodiment of this application;
FIG. 7 is a diagram of a structure of a computing device according to an embodiment of this application; and
FIG. 8 is a diagram of a structure of a computing device cluster according to an embodiment of this application.

### DESCRIPTION OF EMBODIMENTS

The following describes the solutions in embodiments provided in this application with reference to the accompanying drawings in this application.

In this specification, claims, and accompanying drawings of this application, the terms "first", "second", and the like are intended to distinguish between similar objects but do not necessarily indicate a specific order or sequence. It should be understood that the terms used in such a way are interchangeable in proper circumstances. This is merely a discrimination manner that is used when objects having a same attribute are described in embodiments of this application.

A dense matrix factorization method can be implemented according to block and recursive strategies. LU factorization applicable to general matrix factorization is used as an example. The following uses a dense matrix in a form of A*A as an example, where A is a positive integer, to describe a current LU factorization process of the dense matrix.

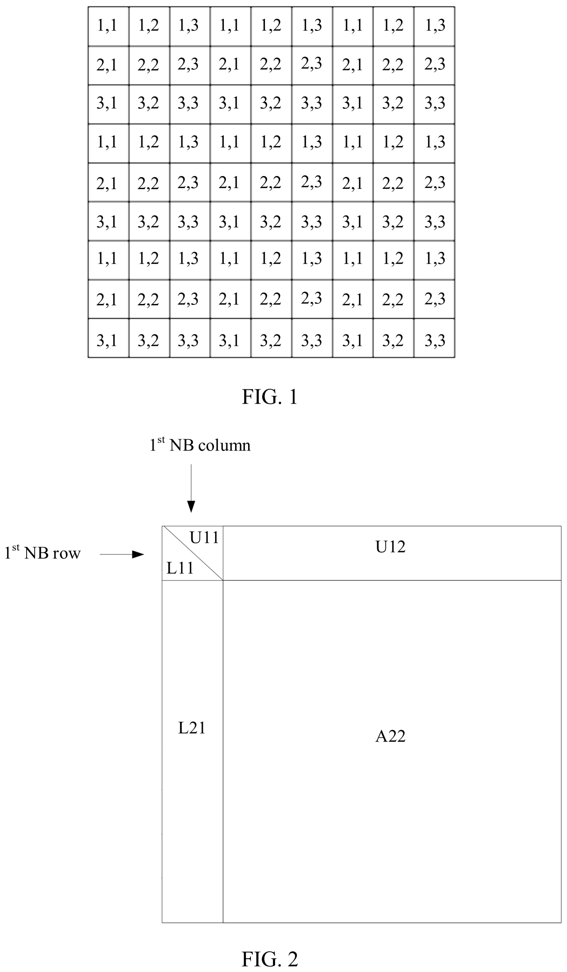

The dense matrix is first divided, so that the divided dense matrix includes blocks in a unit of NB*NB. NB is a positive integer. Refer to FIG. 1. Each grid represents one block. The block may also be referred to as a submatrix. The dense matrix is divided into 81 blocks in a unit of NB*NB. In a distributed computing program, the blocks obtained through division are allocated to a plurality of running processes. Nine processes are used as an example. 9*9 blocks are allocated to the nine processes in a two-dimensional cyclic manner. Refer to FIG. 1. Numbers in a grid represent a process row number and a process column number, and are used to identify a process responsible for calculation of this block.

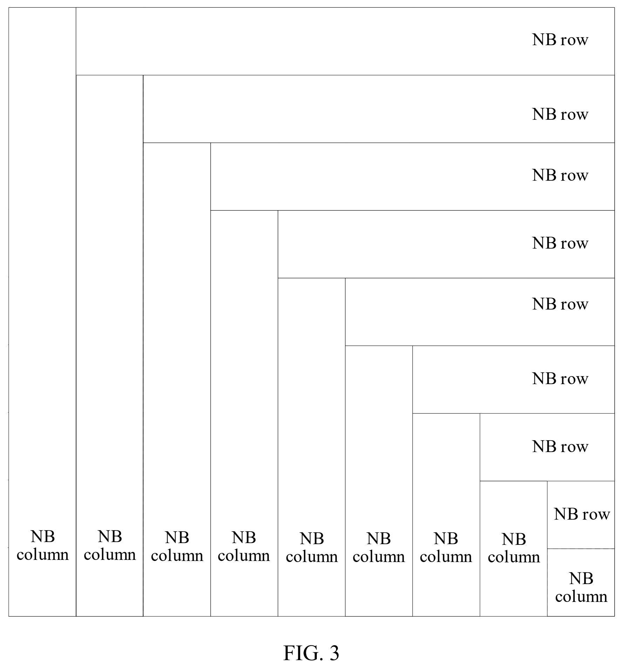

In LU factorization, an idea of a plurality of iterations is used. One NB row and one NB column are processed in each iteration, and a trailing matrix is updated. After the plurality of iterations, the whole matrix can be factorized. Specifically, in a first iteration process, a 1^{st} NB column is first factorized. FIG. 2 is a diagram of dense matrix factorization. A 1^{st} NB column is first factorized to obtain L11 and U11 of a diagonal block and L21. L11 is a lower triangular part of the diagonal block, and U11 is an upper triangular part of the diagonal block. L21 is a part other than the diagonal block in the 1^{st} NB column. It should be noted that, Gaussian elimination with column pivoting is used for factorization. A column pivot is the largest element in a column. After the column pivot is selected, row switching is performed on a row where the column pivot is located and a current row, and then elimination is performed. In a process of factorizing the 1^{st} NB column, row switching information is generated based on the selected column pivot. The row switching information indicates an NB row on which switching needs to be performed with a current NB row, that is, a 1^{st} NB row. Switching is performed on the NB row indicated by the row switching information and the 1^{st} NB row, to obtain U12 obtained through switching. U12 is a part other than the diagonal block in the 1^{st} NB row. Then, a triangular equation U12=L11-1U12 is solved, to obtain updated U12. Finally, a trailing matrix A22 is updated. The trailing matrix A22 is a part other than the 1^{st} NB column and U12 in the dense matrix. A22=A22-L21U12 is calculated. A22 in the matrix is updated by using A22 obtained through calculation. Trailing matrix update includes matrix multiplication, and an algorithm used for matrix multiplication calculation can be invoked to perform calculation. After a first iteration is completed, A22 is factorized in a next iteration by using same steps. FIG. 3 is another diagram of dense matrix factorization. Solid boxes represent NB columns and NB rows processed in each iteration. After a plurality of iterations, dense matrix factorization can be completed.

In an LU factorization process, trailing matrix update in each round of iteration occupies a main calculation amount in the factorization process. Currently, a general matrix multiplication (General Matrix to Matrix Multiplication, GEMM) operator is invoked to implement matrix multiplication calculation in a trailing matrix update process. However, for a memory access-limited computing chip, a memory access bandwidth is limited, and when the GEMM operator is run, a dimension of an input computing matrix needs to be controlled. When the memory access bandwidth is supported, the dimension of the input computing matrix is large, so that calculation efficiency of the GEMM operator can be improved. In a current LU factorization process, a second dimension K of an input matrix of the GEMM operator is equal to a dimension size NB of a block of the matrix, that is, K=NB. Therefore, if high calculation efficiency of the GEMM operator needs to be achieved, NB with a large value needs to be used for dense matrix division. However, a granularity of blocks obtained through division by using NB with a large value is large. In a process of implementing matrix factorization by using processes, the blocks at a large granularity cause imbalanced load of calculation tasks of the processes. As a result, overall matrix factorization calculation efficiency is affected, and overall efficient matrix factorization calculation cannot be implemented.

For the foregoing problem, an embodiment of this application provides a data processing method, to perform LU factorization on to-be-processed data of an application, that is, a dense matrix. The dense matrix is first divided into M*M submatrices. Then, the dense matrix is used as a to-be-factorized matrix, and the to-be-factorized matrix is divided into a first matrix, a second matrix, a third matrix, and a fourth matrix. The first matrix includes R*R submatrices that are located in an upper left corner of the to-be-factorized matrix. The second matrix includes R*(M-R) submatrices that are located right below the first matrix and adjacent to the first matrix. The third matrix includes (M-R)*R submatrices that are adjacent to the first matrix and located on a right side of the first matrix. The fourth matrix is a matrix other than the first matrix, the second matrix, and the third matrix in the to-be-factorized matrix. LU factorization is performed on the first matrix and the second matrix, that is, first R columns of the to-be-factorized matrix, to obtain an updated first matrix and an updated second matrix. Then, a row switching operation and triangular solving are performed on the third matrix to obtain an updated third matrix. A difference between the fourth matrix and a product obtained by performing matrix multiplication on the updated third matrix and the updated second matrix is calculated to obtain an updated fourth matrix. In this way, one iteration is completed. The updated fourth matrix is used as a to-be-factorized matrix, and a same factorization operation is performed. In this way, a plurality of iterations are performed until dense matrix factorization is completed. A dimension of matrix multiplication calculation on the updated second matrix and the updated third matrix is a product of R and a submatrix dimension. The dimension of matrix multiplication calculation is large, and efficient matrix multiplication calculation can be implemented. In this way, the dense matrix can be divided into blocks at a small granularity, to ensure high matrix multiplication calculation efficiency while implementing balanced process load, so as to improve overall matrix factorization calculation efficiency.

In a possible implementation, the data processing method provided in this embodiment of this application can be applied to a standalone computing device configured with a memory access-limited computing chip. The standalone computing device is, for example, a super computer. The standalone computing device runs in a multi-process form.

The following describes the data processing method provided in this embodiment of this application by using an implementation scenario in which a high performance linear system package (High Performance Linpack, HPL) tests computing performance of a computing device. A test process of the HPL mainly includes matrix generation, matrix factorization, back substitution solving, result verification, performance evaluation, and another step. Matrix factorization is the most time-consuming phase in a whole HPL operation process, and is also an important phase that determines the computer performance.

A benchmark test program of the HPL generates a pseudorandom dense matrix b using a linear congruential algorithm (Linear Congruential Algorithm, LCA). The computing device obtains to-be-processed data of an application, that is, the dense matrix generated by the benchmark test program of the HPL. The dense matrix is divided to obtain M*M submatrices. M is a positive integer. The submatrices are allocated, in a two-dimensional cyclic manner, to processes run by the computing device. The dense matrix is used as a to-be-factorized matrix, and the to-be-factorized matrix is divided into a first matrix, a second matrix, a third matrix, and a fourth matrix. The first matrix includes R*R submatrices that are located in an upper left corner of the to-be-factorized matrix. The second matrix includes R*(M-R) submatrices that are located right below the first matrix and adjacent to the first matrix. The third matrix includes (M-R)*R submatrices that are located on a right side of the first matrix and adjacent to the first matrix. The fourth matrix includes remaining (M-R)*(M-R) submatrices. Combined LU factorization is performed on the first matrix and the second matrix of the to-be-factorized matrix, a combined row switching operation and triangular solving are performed on the third matrix, finally matrix multiplication calculation is performed by using an updated second matrix and an updated third matrix, and the fourth matrix is updated by using the obtained matrix. Then, an updated fourth matrix is used as a to-be-factorized matrix, and a factorization operation is performed according to the foregoing factorization method. In this way, a plurality of iterations are performed until calculation of all the M*M submatrices is completed, to obtain an LU factorization result of the dense matrix. Based on the factorization result, a subsequent back substitution solving and result verification process can be performed.

In another possible implementation, the data processing method provided in this embodiment of this application can be applied to a computing cluster of a memory access-limited computing chip. The computing cluster runs in a multi-process form, for example, through a multi point interface (Multi Point Interface, MPI). Computing nodes included in the computing cluster are connected over a network, and communicate with each other by using, for example, a communication protocol of the MPI.

In an example, the computing cluster can implement, by using the data processing method provided in this embodiment of this application, a high-performance computing (High-Performance Computing, HPC) application based on a boundary element method or a method of moments in the scientific computing field. In the boundary element method, a to-be-solved physical area is divided into grids. Analytical expressions in the region and on a boundary are established by using a Green's function, and an original partial differential equation is transformed into a boundary integral equation. Then, the boundary integral equation is discretized on a surface grid, and a system of linear equations is established. A dense matrix is established based on the system of linear equations, and a physical modeling problem is transformed into a dense matrix solving problem. The established dense matrix is to-be-processed data of an application. The computing cluster divides the to-be-processed data of the application, that is, the dense matrix, into M*M submatrices. The dense matrix is used as a to-be-factorized matrix. The to-be-factorized matrix is divided into a first matrix, a second matrix, a third matrix, and a fourth matrix. The first matrix includes R*R submatrices that are located in an upper left corner of the to-be-factorized matrix. The second matrix includes R*(M-R) submatrices that are located right below the first matrix and adjacent to the first matrix. The third matrix includes (M-R)*R submatrices that are located on a right side of the first matrix and adjacent to the first matrix. The fourth matrix includes remaining (M-R)*(M-R) submatrices. Combined LU factorization is performed on the first matrix and the second matrix of the to-be-factorized matrix, a combined row switching operation and triangular solving are performed on the third matrix, finally matrix multiplication calculation is performed by using an updated second matrix and an updated third matrix, and the fourth matrix is updated by using the obtained matrix. Then, an updated fourth matrix is used as a to-be-factorized matrix, and a factorization operation is performed according to the foregoing factorization method. In this way, a plurality of iterations are performed until calculation of all the M*M submatrices is completed, to obtain an LU factorization result of the dense matrix. Based on the LU factorization result, a solution of the system of linear equations, that is, a physical field result on a boundary surface, can be obtained through calculation.

It should be noted that the foregoing two application scenarios are merely used as implementation examples. During actual application, the data processing method provided in this embodiment of this application may also be applied to another applicable data processing scenario.

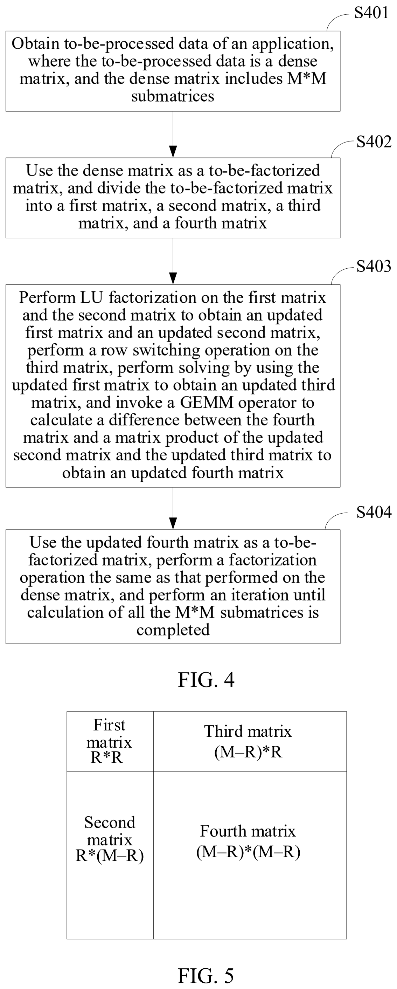

For ease of understanding, the following describes in detail the data processing method provided in this embodiment of this application with reference to the accompanying drawings. FIG. 4 is a schematic flowchart of a data processing method according to an embodiment of this application. The method can be applied to a computing device or a computing cluster that runs a plurality of processes. As shown in FIG. 4, the method may specifically include the following steps.

S401: Obtain to-be-processed data of an application, where the to-be-processed data is a dense matrix, and the dense matrix includes M*M submatrices.

The to-be-processed data of the application is data that needs to be processed and that is generated in a running process of the application or data required for running the application. The to-be-processed data is the dense matrix. The dense matrix is a matrix in which all elements are stored in a logical two-dimensional direction. In an example, the obtained dense matrix is a matrix that needs to be factorized, and the application is used to test performance of the computing device. The to-be-processed data of the application is a randomly generated dense matrix used to test the performance of the computing device. In another example, the application is used to implement physical calculation or mathematical calculation. The dense matrix is used to calculate a physical or mathematical equation. A data type of the element included in the dense matrix is not limited in this embodiment of this application. For example, the element included in the dense matrix can be one or more of a single-precision real number, a double-precision real number, a single-precision complex number, and a double-precision complex number. The dense matrix includes the M*M submatrices. M is a positive integer less than a dimension of the dense matrix. In a possible implementation, a dimension NB of the submatrix can be preset, and a ratio of the dimension of the dense matrix to the dimension of the submatrix is calculated, to obtain a value of M. The specific value of M is not limited in this embodiment of this application. The value of M can be determined based on a quantity of processes and load of each process. In an example, the quantity of the processes is 100, and the value of M is 20. The divided dense matrix includes 20*20 submatrices.

S402: Use the dense matrix as a to-be-factorized matrix, and divide the to-be-factorized matrix into a first matrix, a second matrix, a third matrix, and a fourth matrix.

The dense matrix is factorized, and the dense matrix is used as the to-be-factorized matrix. The to-be-factorized matrix is divided into four matrices: the first matrix, the second matrix, the third matrix, and the fourth matrix. FIG. 5 is a diagram of a first matrix, a second matrix, a third matrix, and a fourth matrix that are included in a to-be-factorized matrix according to an embodiment of this application. The first matrix includes R*R submatrices that are located in an upper left corner of the to-be-factorized matrix. The second matrix includes R*(M-R) submatrices that are in the to-be-factorized matrix and that are located below the first matrix and adjacent to the first matrix. The third matrix includes (M-R)*R submatrices that are in the to-be-factorized matrix and that are located on the left of the first matrix and adjacent to the first matrix. The fourth matrix includes (M-R)*(M-R) submatrices in the to-be-factorized matrix except the first matrix, the second matrix, and the third matrix.

R is a positive integer greater than 1 and less than M. A value of R is determined based on a computing capability of a chip that performs matrix multiplication. The chip that performs matrix multiplication is a chip in the computing device or the computing cluster.

S403: Perform LU factorization on the first matrix and the second matrix to obtain an updated first matrix and an updated second matrix, perform a row switching operation on the third matrix, perform solving by using the updated first matrix to obtain an updated third matrix, and invoke a GEMM operator to calculate a difference between the fourth matrix and a matrix product of the updated second matrix and the updated third matrix to obtain an updated fourth matrix.

After the to-be-factorized matrix is divided into four matrices, LU factorization processing is performed on the to-be-factorized matrix. LU factorization is first performed on the first matrix and the second matrix, that is, LU factorization is performed on first R columns of the to-be-factorized matrix, to obtain the updated first matrix and the updated second matrix. The updated first matrix includes an upper triangular matrix U11 and a lower triangular matrix L11 that are obtained through LU factorization. The updated second matrix is L21.

In an example, this embodiment of this application provides a specific implementation of performing LU factorization on the first matrix and the second matrix. The following steps are included.

A1: Perform panel factorization on an i^{th} column of the first matrix and the second matrix to obtain an i^{th} factorization result and row switching information of an i^{th} row.

An initial value of i is 1. Panel (panel) factorization in LU factorization is performed on the i^{th} column, to obtain the i^{th} factorization result. The i^{th} factorization result includes the i^{th} column, that is, L21i, which includes a lower triangular matrix L11i, an upper triangular matrix U11i, and the second matrix that are generated by factorizing the i^{th} column. The lower triangular matrix is a lower triangular part of a submatrix in the i^{th} row and the i^{th} column after factorization. The upper triangular matrix is an upper triangular part of the submatrix in the i^{th} row and the i^{th} column after factorization. The i^{th} column of the second matrix includes submatrices other than first R rows of submatrices in the i^{th} column of submatrices after factorization. Panel factorization is performed on the i^{th} column to generate the row switching information of the i^{th} row. The row switching information of the i^{th} row indicates row switching of an (i+1)^{th} column to an M^{th} column in the i^{th} row.

A2: Perform panel broadcasting on the i^{th} factorization result and the row switching information of the i^{th} row between processes that are allocated to process submatrices in a 1^{st} column to an R^{th} column.

The i^{th} factorization result obtained by factorizing the i^{th} column needs to be sent to the processes responsible for calculation tasks of the submatrices in the 1^{st} column to the R^{th} column. The i^{th} factorization result and the row switching information of the i^{th} row are communicated between the processes in a panel broadcasting manner.

A3: Perform row switching on the (i+1)^{th} column to the R^{th} column in the i^{th} row based on the row switching information of the i^{th} row.

In a process of performing LU factorization on the first matrix and the second matrix, that is, the 1^{st} column to the R^{th} column, processing is performed only on the submatrices in the 1^{st} column to the R^{th} column. Based on the row switching information of the i^{th} row, a row switching operation is performed on the (i+1)^{th} column to the R^{th} column in the i^{th} row and an (i+1)^{th} column to an R^{th} column in a row where a column pivot of the i^{th} column is located. An (i+1)^{th} column to an R^{th} column in an i^{th} column obtained through the row switching operation are U12i.

A4: Update a local trailing matrix by using L21i, U12i, and the local trailing matrix.

The local trailing matrix A22i is a matrix of a part [R-i]*[R-i]. A difference between the local trailing matrix and a product obtained by performing matrix multiplication on L21i and U12i is calculated, to obtain an updated local trailing matrix.

In a possible implementation, a matrix multiplication operator is invoked to perform matrix multiplication calculation in a process of updating the local trailing matrix. In a process of performing LU factorization on the first matrix and the second matrix, a dimension of a matrix input to the matrix multiplication operator is a dimension of a single submatrix. In an example, the matrix multiplication operator can be one of a general matrix multiplication (General Matrix to Matrix Multiplication, GEMM) operator, a double precision general matrix multiplication (double precision GEneric Matrix Multiplication, DGEMM), an SGEMM single precision general matrix multiplication (single precision GEneric Matrix Multiplication, SGEMM), a single precision complex general matrix multiplication (complex precision GEneric Matrix Multiplication, CGEMM), and a double precision complex general matrix multiplication (double complex precision GEneric Matrix Multiplication, ZGEMM).

A5: Increase the value of i by 1.

A6: If the value of i is less than R, return to perform step A1 to step A5.

A7: If the value of i is equal to R, perform LU factorization on the i^{th} column of the to-be-factorized matrix to obtain the i^{th} factorization result and the row switching information of the i^{th} row, and complete LU factorization on the first matrix and the second matrix.

The R^{th} column is the last column in the 1^{st} column to the R^{th} column on which LU factorization is performed. LU factorization is performed on the R^{th} column to obtain L11R, L21R, and row switching information of an R^{th} row. The row switching information of the R^{th} row indicates row switching of an (R+1)^{th} column and an M^{th} column in the R^{th} row, and row switching does not need to be performed in the process of performing LU factorization on the first matrix and the second matrix. L211 to L21R that are obtained by factorizing the first matrix and the second matrix constitute the updated second matrix. U111 to U11R-1 constitute the upper triangular matrix of the updated first matrix. L111 to L11R constitute the lower triangular matrix of the updated first matrix.

After LU factorization is performed on the first matrix and the second matrix, row switching information of a row switching operation performed on the third matrix can be obtained. The row switching operation is performed on the third matrix by using the row switching information.

In some examples, this embodiment of this application provides two specific implementations of performing the row switching operation on the third matrix by using the row switching information.

In a possible implementation, the row switching operation is performed on a 1^{st} row to an R^{th} row of the third matrix in a sequence of the 1^{st} row to the R^{th} row of the third matrix.

In another possible implementation, the row switching information is preprocessed first to obtain processed row switching information. A specific implementation of preprocessing is not limited in this embodiment of this application. In a possible implementation, preprocessing is combining a plurality of switching operations performed on submatrices in a same row, or deleting row switching information that indicates that the row switching operation is not needed. In this way, execution steps of the row switching operation can be reduced through preprocessing, and row switching efficiency can be improved.

After the row switching operation is completed, the first matrix and a third matrix that is obtained through the row switching operation are used to perform triangular solving. Specifically, a formula of triangular solving is U12=L11-1U120. U12 is the updated third matrix obtained through triangular solving. L11 is the lower triangular matrix of the first matrix. U120 is the third matrix obtained through row switching.

Matrix multiplication calculation is performed on the updated second matrix and the updated third matrix to obtain the product. Then, the difference between the fourth matrix and the product is calculated to obtain the updated fourth matrix.

Matrix multiplication calculation performed on the updated second matrix and the updated third matrix is matrix multiplication calculation that uses a product of R and a submatrix dimension as a dimension. A value of R is large, which can meet an efficient calculation requirement of matrix multiplication, and can also ensure data continuity of data in a memory, so that a data storage requirement of the GEMM operator is met.

S404: Use the updated fourth matrix as a to-be-factorized matrix, perform a factorization operation the same as that performed on the dense matrix, and perform an iteration until calculation of all the M*M submatrices is completed.

The updated fourth matrix is used as a to-be-factorized matrix in a next iteration, the to-be-factorized matrix is divided into four matrices in a same way, LU factorization is performed on a first matrix and a second matrix, a row switching operation is performed on a third matrix, and triangular solving is performed on the first matrix and a third matrix that is obtained through row switching to obtain an updated third matrix. Finally, a difference between a fourth matrix and a product of an updated second matrix and the updated third matrix is calculated to obtain an updated fourth matrix. In this way, a plurality of iterations are performed until dense matrix factorization is completed, in other words, calculation of all the M*M submatrices is completed.

In a possible implementation, the updated fourth matrix includes N*N submatrices, and N is less than or equal to R. Matrix division cannot be performed on the updated fourth matrix. LU factorization is directly performed on the N*N submatrices, to complete dense matrix factorization.

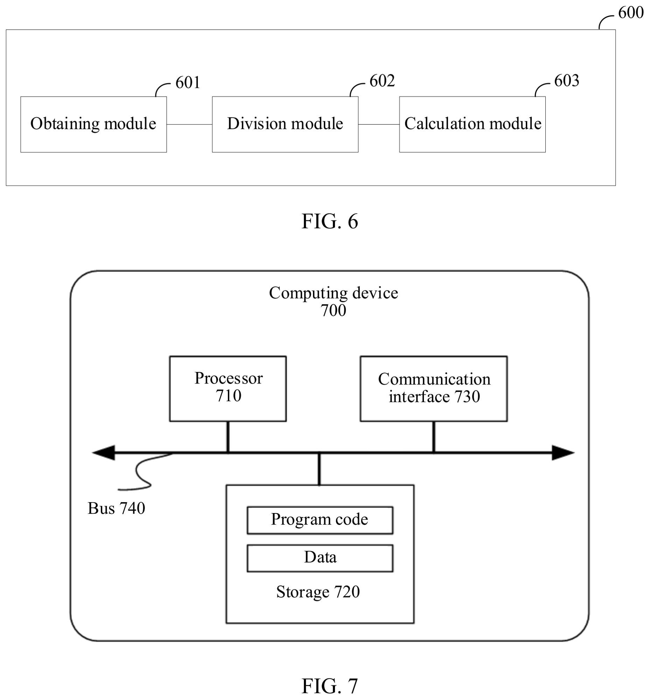

Based on the data processing method provided in the foregoing embodiments, an embodiment of this application further provides a data processing system. FIG. 6 is a diagram of a structure of a data processing system according to an embodiment of this application. The data processing system 600 may be configured in a separate computing device, or configured in a computing cluster. The system may be used in the application scenario shown in FIG. 4, or may be used in another applicable application scenario. In an example, in the foregoing implementation scenario in which the HPL tests the computing performance of the computing device, the data processing system 600 may be deployed in a super computer. In another example, in the foregoing implementation scenario of computing in the scientific computing field, the data processing system 600 may be deployed in the computing cluster.

The data processing system 600 includes an obtaining module 601, a division module 602, and a calculation module 603. The obtaining module 601 is configured to support the computing device or one of the computing device or the computing cluster in performing S401 in the embodiment shown in FIG. 4. The division module 602 is configured to support the computing device or one of the computing device or the computing cluster in performing S402 in the embodiment shown in FIG. 4. The calculation module 603 is configured to support the computing device or one of the computing device or the computing cluster in performing S403 and S404 in the embodiment shown in FIG. 4. For a specific execution process, refer to detailed descriptions of corresponding steps in the embodiment shown in FIG. 4. Details are not described herein again.

The data processing system (including the obtaining module 601, the division module 602, and the calculation module 603) shown in FIG. 4 may be software configured on the computing device or the computing cluster. In addition, the software is run on the computing device or the computing device cluster, so that the computing device or the computing device cluster can implement a function of the data processing system. The following describes in detail a data processing system in a data processing process from a perspective of hardware device implementation.

FIG. 7 is a diagram of a structure of a computing device. The data processing system may be deployed on the computing device. The computing device may be a computing device (for example, a server) in a cloud environment, a computing device in an edge environment, a terminal device, or the like, and may be specifically configured to implement functions of the obtaining module 601, the division module 602, and the calculation module 603.

As shown in FIG. 7, the computing device 700 includes a processor 710, a storage 720, a communication interface 730, and a bus 740. The processor 710, the storage 720, and the communication interface 730 communicate with each other through the bus 740. The bus 740 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 7, but this does not mean that there is only one bus or only one type of bus. The communication interface 730 is configured to communicate with the outside, for example, receive a data processing task.

The processor 710 may be a central processing unit (central processing unit, CPU), an application-specific integrated circuit (application-specific integrated circuit, ASIC), a graphics processing unit (graphics processing unit, GPU), or one or more integrated circuits. The processor 710 may be alternatively an integrated circuit chip, and has a signal processing capability. In an implementation process, functions of the modules in the data processing system may be completed by using an integrated logic circuit of hardware in the processor 710, or by using instructions in a form of software. The processor 710 may be alternatively a general purpose processor, a digital signal processor (digital signal processor, DSP), a field programmable gate array (field programmable gate array, FPGA) or another programmable logic device, a discrete gate or transistor logic device, or a discrete hardware component, and may implement or perform the methods, steps, and logical block diagrams disclosed in embodiments of this application. The general purpose processor may be a microprocessor, or the processor may be any conventional processor or the like. The method disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the storage 720. The processor 710 reads information in the storage 720, and completes some or all functions of the data processing system in combination with hardware of the processor 710.

The storage 720 may include a volatile memory (volatile memory), for example, a random access memory (random access memory, RAM). The storage 720 may further include a non-volatile memory (non-volatile memory), for example, a read-only memory (read-only memory, ROM), a flash memory, an HDD, or an SSD.

The storage 720 stores executable code, and the processor 710 executes the executable code to perform the method performed by the data processing system.

Specifically, when the obtaining module 601, the division module 602, and the calculation module 603 described in the embodiment shown in FIG. 6 implement the embodiment shown in FIG. 4, and the obtaining module 601, the division module 602, and the calculation module 603 described in the embodiment shown in FIG. 6 are implemented by using software, software or program code required by the obtaining module 601, the division module 602, and the calculation module 603 to perform the functions of the steps in the embodiment shown in FIG. 4 is stored in the storage 720, interaction between the obtaining module 601 and another device is implemented through the communication interface 730. The processor is configured to execute the instructions in the storage 720, to implement the method performed by the data processing system.

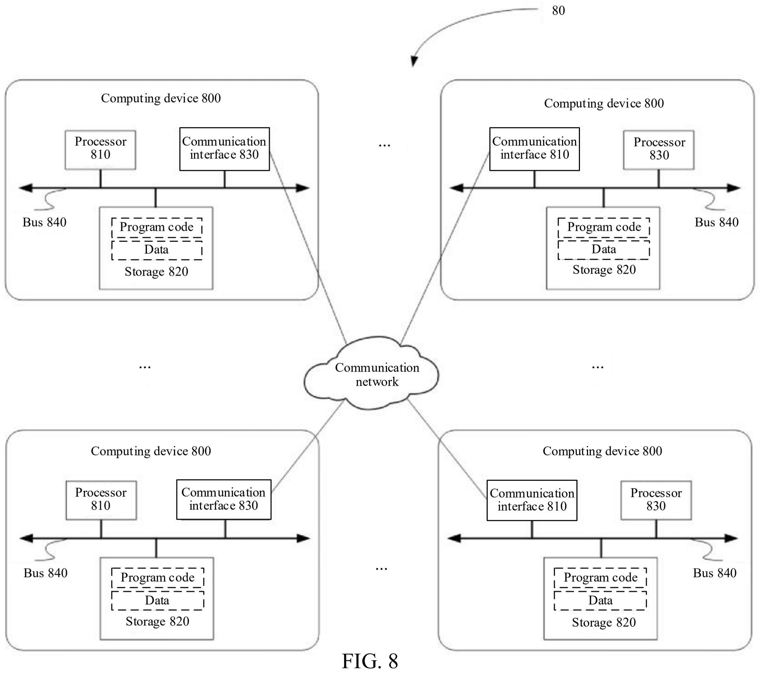

FIG. 8 is a diagram of a structure of a computing device cluster. The computing device cluster 80 shown in FIG. 8 includes a plurality of computing devices, and the foregoing data processing system may be deployed on the plurality of computing devices in the computing device cluster 80 in a distributed manner. As shown in FIG. 8, the computing device cluster 80 includes a plurality of computing devices 800, and each computing device 800 includes a storage 820, a processor 810, a communication interface 830, and a bus 840. The storage 820, the processor 810, and the communication interface 830 are communicatively connected to each other through the bus 840.

The processor 810 may use a CPU, a GPU, an ASIC, or one or more integrated circuits. The processor 810 may be alternatively an integrated circuit chip, and has a signal processing capability. In an implementation process, some functions of the data processing system may be completed by using an integrated logic circuit of hardware in the processor 810, or by using instructions in a form of software. The processor 810 may be alternatively a DSP, an FPGA, a general purpose processor, another programmable logic device, a discrete gate or transistor logic device, or a discrete hardware component, and may implement or perform some of methods, steps, and logical block diagrams disclosed in embodiments of this application. The general purpose processor may be a microprocessor, or the processor may be any conventional processor or the like. The steps of the method disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the storage 820. In each computing device 800, the processor 810 reads information in the storage 820, and may complete some functions of the data processing system in combination with hardware of the processor 810.

The storage 820 may include a ROM, a RAM, a static storage device, a dynamic storage device, a hard disk drive (for example, an SSD or an HDD), and the like. The storage 820 may store program code, for example, some or all program code used to implement the obtaining module 601, some or all program code used to implement the division module 602, and some or all program code used to implement the calculation module 603. For each computing device 800, when the program code stored in the storage 820 is executed by the processor 810, the processor 810 performs, through the communication interface 830, some methods performed by the data processing system. For example, some computing devices 800 may be configured to perform the methods performed by the obtaining module 601, and the other computing devices 800 are configured to perform the methods performed by the division module 602 and the calculation module 603. The storage 820 may further store data, for example, intermediate data or result data generated by the processor 810 in an execution process, for example, the foregoing obtained to-be-processed data and a result obtained through factorization.

The communication interface 803 in each computing device 800 is configured to communicate with the outside, for example, interact with another computing device 800.

The bus 840 may be a peripheral component interconnect bus, an extended industry standard architecture bus, or the like. For ease of representation, only one bold line is used to represent the bus 840 in each computing device 800 in FIG. 8, but this does not mean that there is only one bus or only one type of bus.

A communication path is established between the plurality of computing devices 800 over a communication network, to implement a function of the data processing system. Any computing device may be a computing device (for example, a server) in a cloud environment, a computing device in an edge environment, or a terminal device.

In addition, an embodiment of this application further provides a computer-readable storage medium. The computer-readable storage medium stores instructions. When the instructions are run on one or more computing devices, the one or more computing devices are enabled to perform the methods performed by the modules of the data processing system in the foregoing embodiments.

In addition, an embodiment of this application further provides a computer program product. When the computer program product is executed by one or more computing devices, the one or more computing devices perform any method in the foregoing data processing methods. The computer program product may be a software installation package. When any method in the foregoing data processing methods needs to be used, the computer program product may be downloaded, and the computer program product may be executed on a computer.

In addition, it should be noted that the foregoing described system embodiments are merely examples. The modules described as separate parts may or may not be physically separate, and parts displayed as modules may or may not be physical modules, in other words, may be located in one place, or may be distributed to a plurality of network modules. Some or all the modules may be selected according to actual needs to achieve the objectives of the solutions of embodiments. In addition, in the accompanying drawings of the system embodiments provided in this application, connection relationships between modules indicate that the modules have communication connections with each other, and the communication connections may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated storage, a dedicated component, and the like. Generally, any functions that can be performed by a computer program can be easily implemented by using corresponding hardware. In addition, a specific hardware structure used to achieve a same function may be in various forms, for example, in a form of an analog circuit, a digital circuit, or a dedicated circuit. However, for this application, software program implementation is a better implementation in most cases. Based on such an understanding, the technical solutions of this application essentially or the part contributing to the conventional technologies may be implemented in a form of a software product. A computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in various embodiments of this application.

All or some of the foregoing embodiments may be implemented by using software, hardware, firmware, or any combination thereof. When software is used to implement embodiments, all or some of embodiments may be implemented in a form of a computer program product.

The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (Solid-State Drive, SSD)), or the like.

## Claims

1. A data processing method, wherein the method is applied to a computing device or a computing cluster that runs a plurality of processes, and the method comprises:
obtaining to-be-processed data of an application, wherein the to-be-processed data is a dense matrix, and the dense matrix comprises M*M submatrices;
using the dense matrix as a to-be-factorized matrix, and dividing the to-be-factorized matrix into a first matrix, a second matrix, a third matrix, and a fourth matrix, wherein the first matrix comprises R*R submatrices that are located in an upper left corner of the to-be-factorized matrix, the second matrix comprises R*(M-R) submatrices that are located right below the first matrix and adjacent to the first matrix, the third matrix comprises (M-R)*R submatrices that are located on a right side of the first matrix and adjacent to the first matrix, and the fourth matrix comprises remaining (M-R)*(M-R) submatrices;
performing LU factorization on the first matrix and the second matrix to obtain an updated first matrix and an updated second matrix, performing a row switching operation on the third matrix, performing triangular solving by using the updated first matrix and a third matrix obtained through the row switching operation to obtain an updated third matrix, invoking a GEMM operator to perform matrix multiplication calculation on the updated second matrix and the updated third matrix to obtain a product, and calculating a difference between the fourth matrix and the product to obtain an updated fourth matrix; and
using the updated fourth matrix as a to-be-factorized matrix, performing a factorization operation the same as that performed on the dense matrix, and performing an iteration until calculation of all the M*M submatrices is completed.

2. The data processing method according to claim 1, wherein a value of R is determined based on a computing capability of a chip that performs matrix multiplication.

3. The data processing method according to claim 1, wherein when the updated fourth matrix comprises N*N submatrices, and N is less than or equal to R, LU factorization is performed on the N*N submatrices.

4. The data processing method according to any one of claims 1 to 3, wherein performing the row switching operation on the third matrix comprises:
performing the row switching operation on the third matrix row by row based on row switching information, wherein the row switching information is generated by performing LU factorization on the first matrix and the second matrix.

5. The data processing method according to any one of claims 1 to 3, wherein performing the row switching operation on the third matrix comprises:
preprocessing row switching information to obtain processed row switching information, wherein the row switching information is generated by performing LU factorization on the first matrix and the second matrix; and
performing the row switching operation on the third matrix based on the processed row switching information.

6. A data processing system, wherein the system comprises:
an obtaining module, configured to obtain to-be-processed data of an application, wherein the to-be-processed data is a dense matrix, and the dense matrix comprises M*M submatrices;
a division module, configured to use the dense matrix as a to-be-factorized matrix, and divide the to-be-factorized matrix into a first matrix, a second matrix, a third matrix, and a fourth matrix, wherein the first matrix comprises R*R submatrices that are located in an upper left corner of the to-be-factorized matrix, the second matrix comprises R*(M-R) submatrices that are located right below the first matrix and adjacent to the first matrix, the third matrix comprises (M-R)*R submatrices that are located on a right side of the first matrix and adjacent to the first matrix, and the fourth matrix comprises remaining (M-R)*(M-R) submatrices; and
a calculation module, configured to perform LU factorization on the first matrix and the second matrix to obtain an updated first matrix and an updated second matrix, perform a row switching operation on the third matrix, perform triangular solving by using the updated first matrix and a third matrix obtained through the row switching operation to obtain an updated third matrix, invoke a GEMM operator to perform matrix multiplication calculation on the updated second matrix and the updated third matrix to obtain a product, and calculate a difference between the fourth matrix and the product to obtain an updated fourth matrix, wherein
the calculation module is further configured to use the updated fourth matrix as a to-be-factorized matrix, perform a factorization operation the same as that performed on the dense matrix, and perform an iteration until calculation of all the M*M submatrices is completed.

7. The data processing system according to claim 6, wherein a value of R is determined based on a computing capability of a chip that is in the computing device and that performs matrix multiplication.

8. The data processing system according to claim 6, wherein the calculation module is further configured to: when the updated fourth matrix comprises N*N submatrices, and N is less than or equal to R, perform LU factorization on the N*N submatrices.

9. The data processing system according to any one of claims 6 to 8, wherein that the calculation module is configured to perform the row switching operation on the third matrix comprises:
the calculation module is configured to perform the row switching operation on the third matrix row by row based on row switching information, wherein the row switching information is generated by performing LU factorization on the first matrix and the second matrix.

10. The data processing system according to any one of claims 6 to 8, wherein that the calculation module is configured to perform the row switching operation on the third matrix comprises:
the calculation module is configured to preprocess row switching information to obtain processed row switching information, wherein the row switching information is generated by performing LU factorization on the first matrix and the second matrix; and perform the row switching operation on the third matrix based on the processed row switching information.

11. A computer code product comprising instructions, wherein when the computer code product runs on a computing device, the computing device is enabled to perform the method according to any one of claims 1 to 5.
